Europäisches Patentamt

European Patent Office

Office européen des brevets

(11) Veröffentlichungsnummer: **0 180 120**
**B1**

(12) **EUROPÄISCHE PATENTSCHRIFT**

(45) Veröffentlichungstag der Patentschrift:
11.07.90

(51) Int. Cl.⁵: **H02K 29/08**

(21) Anmeldenummer: **85113302.5**

(22) Anmeldetag: **19.10.85**

(54) Elektronisch kommutierter, kollektorloser Gleichstrommotor.

(30) Priorität: **23.10.84 DE 3438747**

(43) Veröffentlichungstag der Anmeldung:
**07.05.86 Patentblatt 86/19**

(45) Bekanntmachung des Hinweises auf die Patenterteilung:
**11.07.90 Patentblatt 90/28**

(84) Benannte Vertragsstaaten:
**DE FR GB IT SE**

(56) Entgegenhaltungen:
**EP-A- 0 150 070**
**DE-A- 2 807 655**
**DE-A- 3 207 444**

(73) Patentinhaber: **Standard Elektrik Lorenz
Aktiengesellschaft, Lorenzstrasse 10,
D-7000 Stuttgart 40(DE)**

(72) Erfinder: **Feigel, Josef, Dr., Rennweg 76,
D-8300 Landshut(DE)**

(74) Vertreter: **Pohl, Herbert, Dipl.-Ing et al, Standard Elektrik
Lorenz AG Patent- und Lizenzwesen Postfach 30 09 29,
D-7000 Stuttgart 30(DE)**

**Beschreibung**

Die Erfindung betrifft einen elektronisch kommutierten, kollektorlosen Gleichstrommotor mit einem aus einem mehrpolig magnetisierten permanentmagnetischen Körper bestehenden Läufer und einer aus mehreren Teilen bestehenden, auf einem den Läufer umgebenden Isolierstoffkörper angeordneten mehrpoligen Ständerwicklung, welche außen von einem magnetischen Rückschluß aus Dynamoblech umgeben ist.

Ein solcher Gleichstrommotor ist bekannt (Aufsatz: "Elektronikmotor DMc3, ein neuer kollektorloser Gleichstromkleinstmotor" in Siemens-Zeitschrift, Sept.1966, Seiten 690-693). Der bekannte Gleichstrommotor ist beispielsweise für den Antrieb batteriegespeister Tonbandgeräte vorgesehen. Bei diesen Antrieben kommt es in erster Linie auf die Drehzahlkonstanz während des Betriebes an.

Elektronisch kommutierte Gleichstrommotoren finden heute in größerem Maße Verwendung in Geräten der Datenverarbeitung. Für diesen Verwendungszweck werden elektronisch kommutierte Gleichstrommotoren benötigt, die bei einem möglichst hohen Betriebsdrehmoment auch ein gutes dynamisches Verhalten, d.h. kleine Massenträgheit des Läufers und daher kurze Hochlauf- und Abbremszeiten, aufweisen.

Diese Eigenschaften besitzt der bekannte Gleichstrommotor nicht, denn wegen seines massiven Läufers besitzt er ein verhältnismäßig schlechtes dynamisches Betriebsverhalten und wegen der schwachen Kopplung von Statorwicklung und Statoreisen besitzt er einen verhältnismäßig niedrigen Wirkungsgrad.

Der Erfindung liegt daher die Aufgabe zugrunde, einen elektronisch kommutierten, kollektorlosen Gleichstrommotor zu schaffen, der bei einem guten elektrischen Wirkungsgrad ein hohes Drehmoment erzeugt und gleichzeitig ein gutes dynamisches Verhalten besitzt. Gleichzeitig soll der neue Gleichstrommotor so aufgebaut sein, daß er kostengünstig, d.h. ggf. sogar ganz oder wenigstens teilweise automatisch, hergestellt werden kann.

Diese Aufgabe ist erfindungsgemäß durch einen Gleichstrommotor gemäß Oberbegriff des Patentanspruchs 1 mit folgenden Merkmalen gelöst:

a) der Läufer besteht aus einem becherförmigen Hohlzylinder, in dessen Innenraum feststehend ein innerer magnetischer Rückschluß aus Dynamoblech angeordnet ist,

b) die als Trommelwicklung ausgebildete Ständerwicklung besteht aus mehreren, einem Mehrfachen der Polzahl entsprechenden Strängen,

c) die Ständerwicklung ist auf einem Isolierstoffkörper angeordnet, der teilweise zusammen mit den Strängen in den Nuten eines genuteten Ständers angeordnet ist,

d) der Isolierstoffkörper besteht aus einem scheibenförmigen Ring, der auf der einen Stirnseite ringförmig mit einer der Strangzahl entsprechenden Anzahl von rinnenförmigen Nutkörper versehen ist, welche mit einer axial zum scheibenförmigen Ring versetzten Scheibe verbunden sind,

e) zwischen den Fußpunkten der Nutkörper sind in dem Ring Öffnungen mit radial nach außen verlaufenden Schlitzen vorhanden.

f) der scheibenförmige Ring ist auf der anderen Stirnseite mit einem unterhalb der Öffnungen angelenkten Rohrstück versehen.

Vorteilhafte Ausgestaltungen der Erfindung sind in den Ansprüchen 2 bis 8 enthalten. Sie ist nachstehend anhand der Figuren 1 bis 9 erläutert. Es zeigen:

Fig. 1 den Längsschnitt durch ein Ausführungsbeispiel des erfindungsgemäßen Gleichstrommotors,

Fig. 2 den Gleichstrommotor gemäß Fig. 1 in einer teilweisen Explosionsdarstellung,

Fig. 3 die Ansicht der einen Seite des Isolierstoffkörpers in perspektivischer Darstellung,

Fig. 4 die Ansicht der anderen Seite des Isolierstoffkörpers in perspektivischer Darstellung,

Fig. 5 den Isolierstoffkörper gemäß Fig. 3 mit aufgebrachter Ständerwicklung,

Fig. 6 den Isolierstoffkörper gemäß Fig. 4 mit aufgebrachter Ständerwicklung,

Fig. 7 den Blechschnitt des äußeren Ständerblechpakets,

Fig. 8 eine Ausführungsform des Läufers in perspektivischer Darstellung und

Fig. 9 eine andere Ausführungsform des Läufers in perspektivischer Darstellung.

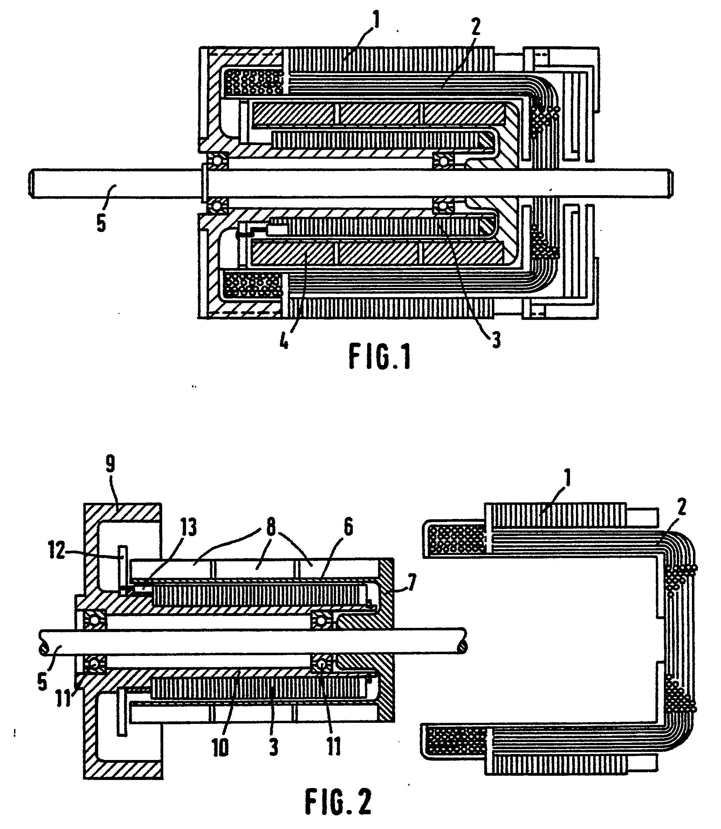

Wie aus Fig. 1 ersichtlich, besitzt der neue Gleichstrommotor einen Ständer, welcher aus dem äußeren, aus einem Dynamoblechpaket bestehenden magnetischen Rückschluß 1, der Trommelwicklung 2 und dem inneren, ebenfalls aus geschichteten Dynamoblechen zusammengesetzten magnetischen Rückschluß 3 besteht. Zwischen der Trommelwicklung 2 und dem inneren magnetischen Rückschluß 3 ist drehbar der als becherförmiger Hohlzylinder ausgebildete Läufer 4 mit der Motorwelle 5 angeordnet.

Wie aus Fig. 2 zu erkennen ist, besteht der Läufer 4 aus einem Becher 6 mit Boden 7, welcher gleichzeitig die Nabe des Läufers 4 ist, aus einem nicht magnetisierbarem Werkstoff, beispielsweise Aluminium. In dem Boden 7 ist drehfest die Motorwelle 5 befestigt. Auf dem Umfang des Bechers 6 sind in einer später näher erläuterten Weise Permanentmagnete 8 befestigt. Der Läufer 4 ist in folgender Weise fliegend gelagert: Der Lagerschild 9 ist mit dem axial verlaufenden zylindrischen Rohr 10 versehen. In dem Rohr 10 sind die Kugellager 11 angeordnet, auf welche die Motorwelle 5 mit dem Läufer aufgesteckt ist. Auf dem Rohr 10 ist außerdem der innere magnetische Rückschluß 3 angeordnet, der aus einer Mehrzahl von ringscheibenförmigen Dynamoblechen besteht.

An dem Lagerschild 9 können auch noch andere Einrichtungen befestigt sein, beispielsweise eine Leiterplatte 12, welche die oder einen Teil der zur Steuerung des Motors erforderlichen elektrischen Schaltung und wenigstens einen Drehstellungssensor 13 wie ein Hall-IC, enthalten kann, der seinerseits in dem Bereich des Läufers angeordnet ist, der über das Ende des inneren magnetischen Rückschlusses 3 hinausragt.

Wie aus den Figuren 1 und 2 deutlich geworden ist, kann der neue Motor in der Weise einfach montiert werden, daß die einzelnen vorgefertigten Teile, wie Lagerschild 9 mit Rohr 10 und innerem magnetischen Rückschluß 3, Läufer und äußeres Ständerteil ineinandergesteckt und befestigt sowie miteinander verbunden werden.

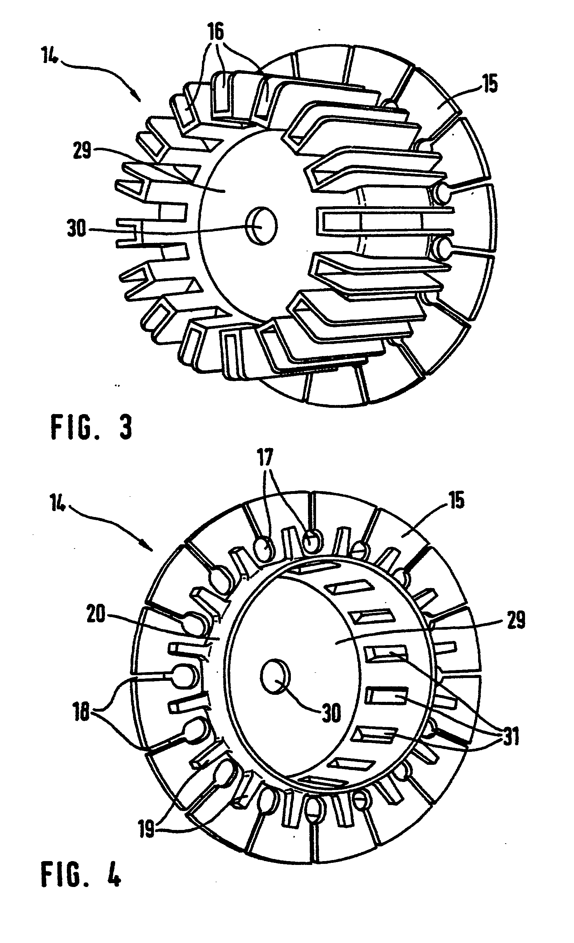

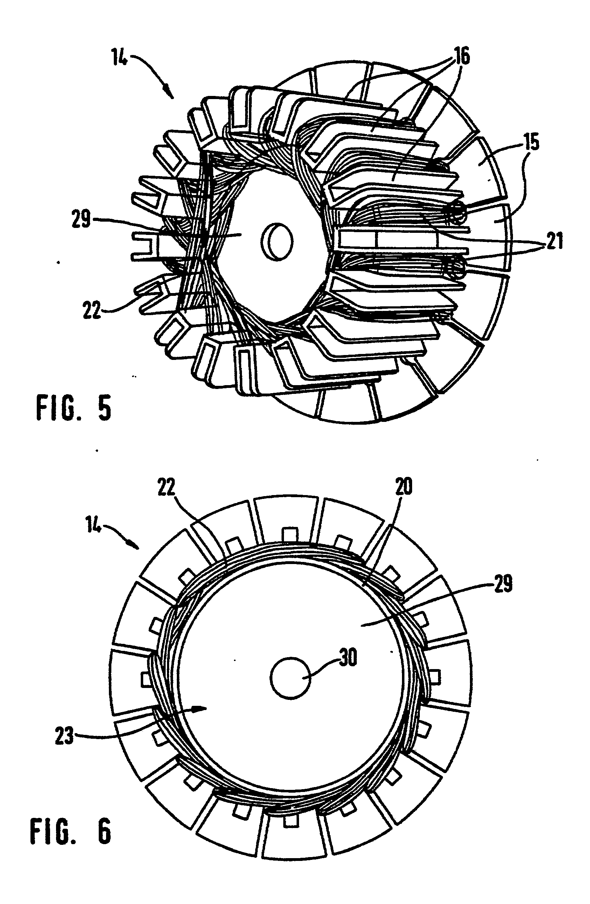

Die Figuren 3 bis 6 verdeutlichen den Aufbau der Ständerwicklung. Zur Herstellung der Ständerwicklung wird der Isolierstoffkörper 14 verwendet, dessen eine Seite Fig. 3 und dessen andere Seite Fig. 4 verdeutlicht. Der Isolierstoffkörper 14 besteht aus dem scheibenförmigen Ring 15, der - wie aus Fig. 3 zu erkennen auf der einen Seite mit einer Mehrzahl von kreisförmig angeordneten und axial verlaufenden rinnenförmigen Nutkörpern 16 versehen ist.

Die Anzahl der Nutkörper 16 entspricht einem Vielfachen der Polpaarzahl des Motors.

Die Nutkörper stützen sich nach einem Teil ihrer Längserstreckung auf dem Rohrstück 20 und einer mit den Nutkörpern verbundenen Scheibe 29 ab, die axial gegenüber dem Ring 15 versetzt angeordnet und mit dem Loch 30 versehen ist.

Die Nutkörper 16 weisen nur auf ihrem freitragenden Ende außerhalb der Scheibe sowohl Seitenwände als auch einen Boden auf. In dem Bereich zwischen dem Ring 15 und der Scheibe 29 besteht der Nutkörper 16 nur aus Seitenteilen, welche derart auf dem Rohrstück 20 angeordnet sind, daß zwischen ihnen die schlitzförmigen Öffnungen 31 entstehen. Bei dem fertigen Motor sind in den schlitzförmigen Öffnungen 31 die freien Enden der Zähne 24 angeordnet.

Wie aus Fig. 4 ersichtlich ist, welche die andere Seite des scheibenförmigen Ringes 15 zeigt, sind zwischen den Fußpunkten der Nutkörper 16 Öffnungen 17 vorhanden, welche mit radial nach außen verlaufenden Schlitzen 18 in Verbindung stehen. Zwischen den Öffnungen 17 sind Stege 19 angeordnet. Außerdem ragt ein Teil des Rohrstücks 20 über den scheibenförmigen Ring 15 hinaus.

Die Figuren 5 und 6 zeigen die gleichen Ansichten des Isolierstoffkörpers 14 wie die Figuren 3 und 4, der aber nunmehr mit der Trommelwicklung des Ständers bewickelt ist. Die einzelnen Stränge 21 der Trommelwicklung liegen außerhalb der Nutkörper 16 zwischen den Seitenwänden der Nutkörper 16. Auf der aus Fig. 5 ersichtlichen Seite der Ständerwicklung bilden die Stränge einen auf der Scheibe 29 aufliegenden Wickelkopf 22, der nahezu die gesamte Stirnfläche einnimmt. Derartige Anordnungen sind aus dem Elektromaschinenbau allgemein bekannt. Diese Seite der Ständerwicklung bildet den Teil des Ständers, der in den Figuren 1 und 2 auf der rechten Seite dargestellt ist.

Auf der anderen Seite des bewickelten Isolierstoffkörpers 14, welche in Fig. 6 verdeutlicht ist, verhindert das über den Ring 15 hinausragende Teil des Rohrstucks 20, daß die von Öffnung zu Öffnung 17 verlaufenden Wickelköpfe 22 in den Bereich des Öffnungsquerschnittes 23 gelangen Diese Seite der Ständerwicklung bildet den Teil des Ständers, der in den Figuren 1 und 2 auf der linken Seite dargestellt ist. Die Stege 19 stellen sicher, daß die noch nicht bewickelten Öffnungen 17 von den Wickelköpfen verdeckt werden.

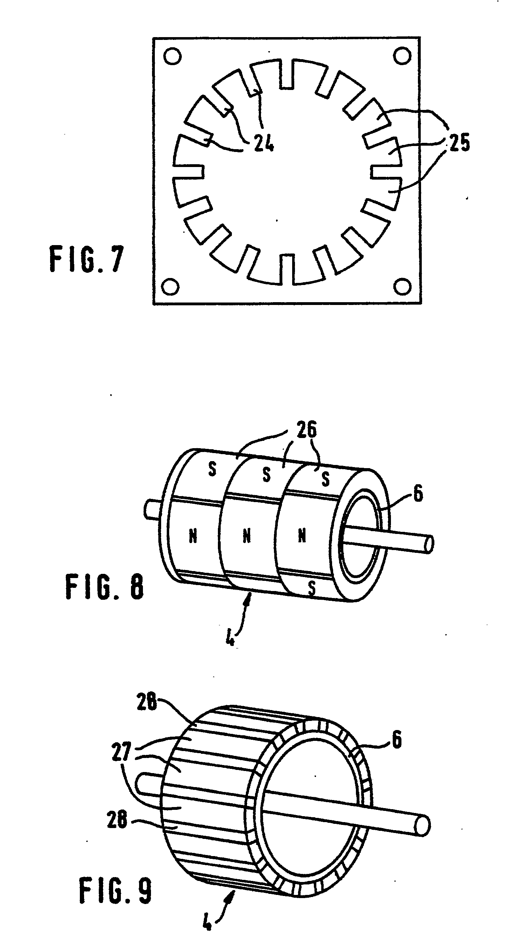

Wenn der Isolierstoffkörper 14 in der aus Fig. 5 und Fig. 6 ersichtlichen Weise bewickelt ist, dann wird er mit der Wicklung in einen genuteten äußeren magnetischen Rückschluß 1 eingeschoben, der aus einem Blechschnitt zusammengesetzt ist, wie er in Fig. 7 gezeigt ist. Dabei legen sich die Seitenteile der Nutkörper 16 an die Zähne 24 des genuteten Blechpaketes des äußeren magnetischen Rückschlusses 1 an und um die Stränge der Wicklung herum. Wenn die Seitenwände der Nutkörper 16 entsprechend breit und flexibel ausgebildet sind, dann können sie sogar den Boden der Nuten 25 bedecken, in deren Hohlraum die Stränge 21 der Ständerwicklung untergebracht sind.

Die Figuren 8 und 9 zeigen zwei verschiedene Ausführungsformen des Läufers 4. Bei dem aus Fig. 8 ersichtlichen Ausführungsbeispiel sind auf dem Umfang des Bechers 6 in der eingezeichneten Weise radial magnetisierte Permanentmagnet-Ringe 26 oder -Schalen befestigt, z.B. aufgeklebt, und ggf. vorhandene Fugen mit einem nicht magnetisierbaren Werkstoff, z.B. Kunststoff, ausgefüllt.

Bei dem aus Fig. 9 ersichtlichen Ausführungsbeispiel sind auf dem Umfang des Bechers 6 radial magnetisierte Permanentmagnetquader 27 befestigt und die dazwischenliegenden Fugen 28 ebenfalls mit einem nicht magnetisierbaren Werkstoff ausgefüllt.

Bezugszeichenliste

1 äußerer magnetischer Rückschluß
2 Ständerwicklung
3 innerer magnetischer Rückschluß
4 Läufer
5 Motorwelle
6 Becher
7 Boden
8 Permanentmagnete
9 Lagerschild
10 Rohr
11 Kugellager
12 Leiterplatte
13 Drehstellungssensor
14 Isolierstoffkörper
15 Ring
16 Nutkörper
17 Öffnung
18 Schlitz
19 Steg
20 Rohrstück
21 Strang
22 Wickelkopf
23 Öffnungsquerschnitt
24 Zahn
25 Nut
26 Ringe
27 Quader
28 Fuge
29 Scheibe
30 Loch
31 schlitzförmige Öffnung

## Patentansprüche

1. Elektronisch kommutierter, kollektorloser Gleichstrommotor mit einem aus einem mehrpolig magnetisierten permanentmagnetischen Körper bestehenden Läufer (4) und einer aus mehreren Teilen bestehenden, auf einem den Läufer umgebenden Isolierstoffkörper (14) angeordneten mehrpoligen Ständerwicklung, welche außen von einem magnetischen Rückschluß (1) aus Dynamoblech umgeben ist, **gekennzeichnet durch** folgende Merkmale :

a) der Läufer (4) besteht aus einem becherförmigen Hohlzylinder (6, 7), in dessen Innenraum feststehend ein innerer magnetischer Rückschluß (3) aus Dynamoblech angeordnet ist,

b) die als Trommelwicklung ausgebildete Ständerwicklung(2) besteht aus mehreren, einem Mehrfachen der Polzahl entsprechenden Strängen (21),

c) die Ständerwicklung (2) ist auf einem Isolierstoffkörper (14) angeordnet, der teilweise zusammen mit den Strängen in den Nuten (25) eines genuteten Ständers angeordnet ist,

d) der Isolierstoffkörper (14) besteht aus einem scheibenförmigen Ring (15), der auf der einen Stirnseite ringförmig mit einer der Strangzahl entsprechenden Anzahl von rinnenförmigen Nutkörpern(16) versehen ist, welche mit einer axial zum scheibenförmigen Ring (15) versetzten Scheibe (29) verbunden sind,

e) zwischen den Fußpunkten der Nutkörper (16) sind in dem Ring (15) Öffnungen (17) mit radial nach außen verlaufenden Schlitzen (18) vorhanden.

f) der scheibenförmige Ring (15) ist auf der anderen Stirnseite mit einem unterhalb der Öffnungen (17) angelenkten Rohrstück (20) versehen.

2. Gleichstrommotor nach Anspruch 1, dadurch gekennzeichnet, daß der Läufer (4) in Lagern (11) drehbar gelagert ist, welche in einem mit dem einen Lagerschild (9) verbundenen zylindrischen Rohr (10) angeordnet sind, auf dessen äußerem Umfang auch der innere magnetische Rückschluß (3) angeordnet ist.

3. Gleichstrommotor nach den Ansprüchen 1 und 2, dadurch gekennzeichnet, daß der Läufer (4) aus einem becherförmigen Körper (6) aus einem nicht magnetisierbaren Werkstoff besteht, auf dessen Umfang mehrpolig magnetisierte Permanentmagnetringe (26) angeordnet sind.

4. Gleichstrommotor nach den Ansprüchen 1 und 2, dadurch gekennzeichnet, daß der Läufer (4) aus einem becherförmigen Körper (6) aus einem nicht magnetisierbaren Werkstoff besteht, auf dessen Umfang eine Mehrzahl von sich in axialer Richtung erstreckenden Permanentmagnetquadern (27) angeordnet sind.

5. Gleichstrommotor nach den Ansprüchen 1 und 2 sowie einem der Ansprüche 3 oder 4, dadurch gekennzeichnet, daß der Läufer (4) eine größere Länge als der Ständer aufweist.

6. Gleichstrommotor nach den Ansprüchen 1, 2 und 5 sowie einem der Ansprüche 3 oder 4, dadurch gekennzeichnet, daß in dem über das Ende des Ständers hinausragenden Bereich des Läufers (4) wenigstens ein Läuferstellungssensor (13), wie ein Hall-IC, angeordnet ist.

7. Gleichstrommotor nach den Ansprüchen 1, 2, 5 und 6 sowie einem der Ansprüche 3 oder 4, dadurch gekennzeichnet, daß die Seitenwände der Nutkörper (16) zu ihrem Ende hin dünnwandig ausgebildet sind.

8. Gleichstrommotor nach den Ansprüchen 1, 2, 5, 6 und 7 sowie einem der Ansprüche 3 und 4, dadurch gekennzeichnet, daß auf der Seite des scheibenförmigen Ringes (15), auf welcher das Rohrstück (20) vorhanden ist, zwischen den Schlitzen (18) Stege (19) angeordnet sind.

## Claims

1. Electronically commutated, collectorless direct current motor having a multipolar, permanent-magnet rotor (4) and a multipart, multipolar stator winding wound on an insulating body (14) surrounding the rotor, said stator winding being surrounded by an external magnetic yoke (1) comprised of dynamo sheets, characterized by the following features:

a) The rotor (4) is designed in the form of a cup-shaped hollow cylinder (6, 7) in whose interior an internal magnetic yoke (3) comprised of dynamo sheets is fixedly mounted;

b) the stator winding, designed in the form of a drum winding (2), consists of a number of phase windings (21) equal to a multiple of the number of poles;

c) the stator winding (2) is wound on an insulating body (14) disposed partly together with the phase windings in the slots (25) of a slotted stator;

d) the insulating body (14) comprises a disk-shaped ring (15) provided on one side with a number of circularly arranged slotted bodies (16) equal to the number of phase windings, said slotted bodies being connected with a disk (29) axially displaced in relation to the disk-shaped ring (15);

e) between the foots of the slotted bodies (16), the ring (15) has openings (17) with radially outwardly extending slots (18), and

f) on the other side, the disk-shaped ring (15) has a tubing (20) pivoted thereto below the openings (17).

2. A direct current motor as claimed in claim 1, characterized in that the rotor (4) runs on bearings (11) contained in a cylindrical tube (10) connected with an end shield (9), the periphery of said cylindrical tube (10) also supporting the internal magnetic yoke (3).

3. A direct current motor as claimed in claims 1 and 2, characterized in that the rotor (4) consists of a cup-shaped body (6) of nonmagnetic material having multipolar permanent-magnet rings (26) attached to its periphery.

4. A direct current motor as claimed in claims 1 and 2, characterized in that the rotor (4) consists of a cup-shaped body (6) of nonmagnetic material having a plurality of axially extending permanent-magnet rectangular parallelepipeds (27) attached to its periphery.

5. A direct current motor as claimed in claims 1 and 2 and in claim 3 or 4, characterized in that the rotor (4) has a greater length than the stator.

6. A direct current motor as claimed in claims 1, 2, and 5 and in claim 3 or 4, characterized in that at least one rotary-position sensor (13), e.g., a Hall IC, is disposed in the area in which the rotor (4) overextends the stator.

7. A direct current motor as claimed in claims 1, 2, 5, and 6 and in claim 3 or 4, characterized in that the sidewalls of the slotted bodies (16) are thin toward their ends.

8. A direct current motor as claimed in claims 1, 2, 5, 6, and 7 and in claim 3 or 4, characterized in that on the side of the disk-shaped ring (15) on which the tubing (20) is present, ridges (19) are disposed between the slots (18).

**Revendications**

1. Moteur à courant continu sans collecteur, commuté électroniquement, comportant un rotor (4) se composant d'un corps à magnétisme permanent, magnétisé avec pôles multiples, et d'un enroulement de stator à plusieurs pôles, se composant de plusieurs parties, disposé sur un corps (14) en matière isolante entourant le rotor et qui est lui-même entouré extérieurement par un organe de retour magnétique (1) constitué d'une tôle de dynamo, caractérisé par les particularités suivantes:

a) le rotor (4) se compose d'un cylindre creux (6, 7) en forme de gobelet, dans le volume intérieur duquel est disposé en position fixe un organe intérieur de retour magnétique (3) formé d'une tôle de dynamo,

b) l'enroulement de stator (2), agencé comme un enroulement en tambour, se compose de plusieurs brins (21) correspondant à un multiple du nombre de pôles,

c) l'enroulement de stator (2) est disposé sur un corps (14) en matière isolante, qui est engagé en partie en même temps que les brins dans les encoches (25) d'un stator encoché,

d) le corps (14) en matière isolante se compose d'un anneau (15) en forme de disque, qui est pourvu sur un côté frontal, avec une forme annulaire, d'un nombre, correspondant au nombre de brins, de corps rainurés (16) en forme de rigoles, qui sont reliés à un disque (29) décalé axialement par rapport à l'anneau (15) en forme de disque,

e) il est prévu entre les pieds des corps rainurés (16), dans l'anneau (15), des ouvertures (17) pourvues de fentes (18) orientées radialement vers l'extérieur,

f) l'anneau (15) en forme de disque est pourvu, sur l'autre côté frontal, d'un élément tubulaire (20) articulé en dessous des ouvertures (17).

2. Moteur à courant continu selon la revendication 1, caractérisé en ce que le rotor (4) est monté à rotation dans des paliers (11), qui sont disposés dans un tube cylindrique (10), relié à un capot de palier (9) et sur la périphérie extérieure duquel est également disposé l'organe intérieur de retour magnétique (3).

3. Moteur à courant continu selon une des revendications 1 et 2, caractérisé en ce que le rotor (4) se compose d'un corps (6) en forme de gobelet, constitué d'un matériau non magnétisable et sur la périphérie duquel sont disposés des anneaux (26) à magnétisme permanent qui sont magnétisés avec pôles multiples.

4. Moteur à courant continu selon une des revendications 1 et 2, caractérisé en ce que le rotor (4) se compose d'un corps (6) en forme de gobelet, constitué d'un matériau non magnétisable et sur la périphérie duquel sont disposés plusieurs parallélépipèdes (27) à magnétisme permanent s'étendant dans une direction axiale.

5. Moteur à courant continu selon une des revendications 1 et 2 et également une des revendications 3 ou 4, caractérisé en ce que le rotor (4) a une plus grande longueur que le stator.

6. Moteur à courant continu selon les revendications 1, 2 et 5 ainsi qu'une des revendications 3 ou 4, caractérisé en ce qu'il est prévu, dans la zone du rotor (4) qui dépasse de l'extrémité du stator, au moins un capteur de position de rotor (13), comme un circuit à effet Hall (Hall-IC).

7. Moteur à courant continu selon les revendications 1, 2, 5 et 6 ainsi qu'une des revendications 3 ou 4, caractérisé en ce que les parois latérales du corps rainuré (16) sont réalisées avec paroi mince à son extrémité.

8. Moteur à courant continu selon les revendications 1, 2, 5, 6 et 7 ainsi qu'une des revendications 3 et 4, caractérisé en ce que des nervures (19) sont disposées entre les fentes (18), sur le côté de l'anneau (15) en forme de disque où est prévu l'élément tubulaire (20).

FIG.1

FIG.2

FIG. 3

FIG. 4

FIG. 5

FIG. 6

**FIG. 7**

**FIG. 8**

**FIG. 9**